(19) Europäisches Patentamt

European Patent Office

Office européen des brevets

(11) Veröffentlichungsnummer : **0 355 159 B1**

(12) **EUROPÄISCHE PATENTSCHRIFT**

(45) Veröffentlichungstag der Patentschrift :
**12.08.92 Patentblatt 92/33**

(21) Anmeldenummer : **88901507.9**

(22) Anmeldetag : **23.12.87**

(86) Internationale Anmeldenummer :
**PCT/SU87/00149**

(87) Internationale Veröffentlichungsnummer :
**WO 89/05684 29.06.89 Gazette 89/14**

(51) Int. Cl.⁵ : **B01D 11/04**

(54) **MISCH- UND ABSETZAPPARAT FÜR DIE FLÜSSIG-FLÜSSIG-EXTRAKTION.**

(43) Veröffentlichungstag der Anmeldung :
**28.02.90 Patentblatt 90/09**

(45) Bekanntmachung des Hinweises auf die
Patenterteilung :
**12.08.92 Patentblatt 92/33**

(84) Benannte Vertragsstaaten :
**AT BE DE FR GB SE**

(56) Entgegenhaltungen :
**GB-A- 908 917**
**SU-A- 168 641**
**SU-A- 273 157**
**SU-A- 644 499**
**SU-A- 963 145**
**US-A- 2 361 780**
**US-A- 2 580 010**

(73) Patentinhaber : **INSTITUT KHIMII I**
**TEKHNOLOGII REDKIKH ELEMENTOV I**
**MINERALNOGO SYRYA KOLSKOGO FILIALA**
**AKADEMII NAUK SSSR**
**ul. Fersmana, 14 Murmanskaya obl.**
**Apatity, 184200 (SU)**

(72) Erfinder : **SKLOKIN, Leonid Irineevich**
**ul. Kozlova, 5-38 Murmanskaya obl.**
**Apatity, 184200 (SU)**

Erfinder : **LEIF, Vladimir Eduardovich**
**ul. Zinovieva, 8-34 Murmanskaya obl.**
**Apatity, 184200 (SU)**
Erfinder : **SEDNEV, Jury Mikhailovich**
**ul. Dzerzhinskogo, 45-82**
**Murmanskaya obl. Apatity, 184200 (SU)**
Erfinder : **MASLOBOEVA, Sofya Mikhailovna**
**ul. Stroitelei, 41-41**
**Murmanskaya obl. Apatity, 184200 (SU)**
Erfinder : **KOVALEVSKY, Vladimir Pavlovich**
**ul. Fersmana, 54-118**
**Murmanskaya obl. Apatity, 184200 (SU)**
Erfinder : **KORPUSOV, Genrikh Vasilievich**
**Leninsky pr., 69-3-398**
**Moscow, 117296 (SU)**
Erfinder : **STEPANOV, Vladimir Yakovlevich**
**ul. Gorkogo, 6-8 Estonskaya SSR**
**Sillamyae, 202010 (SU)**
Erfinder : **BOBYLKOV, Boris Mikhailovich**
**ul. Chkalova, 20-62 Estonskaya SSR**
**Sillamyae, 202010 (SU)**
Erfinder : **KALINNIKOV, Vladimir Trofimovich**
**ul. Zinovieva, 10-65 Murmanskaya obl.**
**Apatity, 184200 (SU)**
Erfinder : **STEFANOVICH, Boris Mikhailovich**
**ul. Festivalnaya, 10-63**
**Murmanskaya obl. Apatity, 184200 (SU)**

(74) Vertreter : **Nix, Frank Arnold, Dr.**
**Kröckelbergstrasse 15**
**W-6200 Wiesbaden (DE)**

## Beschreibung

Die vorliegende Erfindung bezieht sich auf Vorrichtungen zur Durchführung der Gegenstromextraktion und betrifft einen Misch- und Absetzapparat für die Flüssig- Flüssig-Extraktion.

Die Erfindung kann in der chemischer, petrolchemischen und in der metallurgischen Industrie zur Durchführung der Extraktion in flüssigen Systemen verwendet werden.

Zugrundeliegender Stand der Technik

Es ist ein Misch- und Absetzapparat für die Flüssig-Flüssig-Extraktion bekannt ("Handbook of Solvent Extraktion", Edited by Teh C. Lo, Malcolm H.G., Baird, Carl Hanso, John Wiley and Sons, New York, I983, p. 280), in dem jede Extraktionskammer ein Gehäuse enthält, dessen Innenraum durch eine senkrechte Trennwand in eine Mischzone und eine Absetzzone unterteilt ist. Die senkrechte Trennwand hat in Höhe der Phasengrenze eine Öffnung zum Überlaufen des Phasengemisches in die Absetzzone. In der Mischzone befinden sich eine am Gehäuse befestigte Rotationsmischvorrichtung und ausserdem Mittel für die Zuführung der leichten und der schweren Phase. In der Absetzzone sind am Gehäuse befestigte Mittel für die Ableitung der leichten und der schweren Phase untergebracht.

Im bekannten Apparat ist jedoch das Mischen und Transportieren der Phasen zusammengelegt und wird von der Rotationsvorrichtung ausgeführt, weshalb in der Mischzone eine getrennte Regulierung der Zusammensetzung des Phasengemisches und seines Volumens nicht vorgenommen werden kann. Die wirkt sich negativ auf die Leistung der Apparate dieses Typs aus, erschwert ihren Betrieb und erhöht ihren Platzbedarf.

Es ist auch ein Misch- und Absetzapparat für die Flüssig-Flüssig-Extraktion bekannt (SU-A-940789), in dem jede Extraktionskammer ein Gehäuse enthält, dessen Innenraum durch eine senkrechte Trennwand in eine Mischzone und eine Absetzzone unterteilt ist. Die Höhe der senkrechten Trennwand ist kleiner als die Höhe der Wände des Gehäuses, so dass an der Sohle des Gehäuses ein Zwischenraum entsteht, durch den die Mischzone und die Absetzzone miteinander verbunden sind. In der Mischzone sind eine Reihe waagerechter Zwischenwände mit Öffnungen in der Mitte, in denen sich eine am Gehäuse befestigte Rotationsmischvorrichtung befindet, und ausserdem Mittel für die Zuführung der leichten und schweren Phase angebracht. Diese Mittel sind als Stutzen an einer Seitenwand des Gehäuses bzw. als Öffnungen in der anderen Seitenwand des Gehäuses ausgeführt. In der Absetzzone sind Mittel für die Ableitung der leichten und der schweren Phase untergebracht. Das Mittel zu Ableitung der leichten Phase stellt eine Überlaufvorrichtung in Form einer Öffnung in der Seitenwand des Gehäuses dar. Das Mittel zur Ableitung der schweren Phase ist in Form eines hydraulischen Verschlusses ausgeführt und besitzt eine Transportvorrichtung.

Im bekannten Extraktionsapparat ist das Mischen und Transportieren der Phasen teilweise getrennt. Die leichte Phase fliesst im Selbstfluss aus der Absetzkammer in die benachbarte Extraktionskammer, während die schwere Phase durch die Transportvorrichtung zwangsbewegt wird.

Die Anwendung einer herkömmlichen .Rotationsmischvorrichtung in dem bekannten Apparat verhindert eine effektive Regulierung der Zusammensetzung des Phasengemisches, d.h., eine Änderung des Tropfendurchmessers der dispersen Phase und der Anzahl der Tropfen in einem weiten Bereich bei gleichzeitiger Gewährleistung einer hohen Homogenität der Zusammensetzung des Phasengemisches wird nicht ermöglicht. Im bekannten Apparat besteht nicht die Möglichkeit einer getrennten Regulierung der Dispersionszusammensetzung des Phasengemisches und seines Volumens in der Mischzone.

Durch das Überfliessen der leichten Phase aus einer Extraktionskammer in die andere im Selbstfluss sind die Kammern einerseits strömungstechnisch voneinander abhängig und andererseits wird der Arbeitsraum der Kammern nicht voll ausgenutzt infolge der Notwendigkeit, in den Kammern einen unterschiedlichen Füllstand aufrechtzuerhalten, was sich letztlich ungünstig auf die Regulierung der Zusammensetzung des Phasengemisches auswirkt. Die genannten Besonderheiten der Konstruktion des bekannten Apparats ermöglichen nicht, seine Leistung zu erhöhen und die Standfläche zu veringern.

Ausserdem führt die schachbrettartige Anordnung der Mischzonen und der Absetzzonen in benachbarten Kammern zu Erweiterung der Bedienungszone des Apparats.

Offenbarung der Erfindung

Der Erfindung liegt die Aufgabe zugrunde, einen Misch- und Absetzapparat für die Flüssig-Flüssig-Extraktion zu schaffen, dessen konstruktive Ausführung die Möglichkeit einer getrennten Regulierung der Dispersionszusammensetzung des Phasengemisches und des Volumens des Phasengemisches in der Mischzone gewährleistet, wodurch die Leistung des Apparats erhöht, seine Standfläche verringert und seine Bedienungszone verkleinert werden kann.

2

EP 0 355 159 B1

Die gestellte Aufgabe wird dadurch gelöst, dass in einem Misch- und Absetzapparat für die Flüssig-Flüssig-Extraktion, in dem jede Extraktionskammer ein Gehäuse mit einer in ihm angebrachten ersten Trennwand hat, die den Innenraum des Gehäuses in eine Mischzone, in der sich eine am Gehäuse befestigte Mischvorrichtung und Mittel für die Zuführung der leichten bzw. schweren Phase befinden, und eine mit der Mischzone verbundene Absetzzone unterteilt, in der ein am Gehäuse befestigtes Mittel zur Ableitung der leichten Phase, das eine Überlaufvorrichtung darstellt, und ein Mittel zur Ableitung der schweren Phase, das einen hydraulischen Verschluss und eine mit ihm verbundene erste Transportvorrichtung darstellt, untergebracht sind, gemäss der Erfindung die erste Trennwand längs der Längsachse des Gehäuses über der Überlaufvorrichtung angebracht ist, die Mischvorrichtung mit einem Mittel zur Zuführung wenigstens einer der Phasen verbunden und in Form wenigstens eines Hohlelements ausgeführt ist, dessen Wände Öffnungen haben, deren Austrittsquerschnitte zur ersten Trennwand hin gerichtet sind, und das vorrangig senkrecht zur Längsachse des Gehäuses aufgestellt ist, die erste Trennwand ein Mittel zur Regulierung der Höhe der Schicht der Phasen in der Mischzone hat, das an dieser Trennwand an der Stelle befestigt ist, die in Längsrichtung am weitesten vom Mittel zu Zuführung der Phasen entfernt ist, und in der Absetzzone eine zweite Transportvorrichtung vorgesehen ist, die am Gehäuse hinter der Überlaufvorrichtung in Strömungsrichtung der leichten Phase befestigt ist.

Die Anbringung der ersten Trennwand längs der Längsachse des Gehäuses über der Überlaufvorrichtung ermöglicht die Bildung einer Emulsion in Form einer ausgedehnten Schicht und nicht als Flüssigkeitssäule, was Voraussetzungen für eine effektive Regulierung der Höhe der Emulsionsschicht und folglich auch des Volumens der Emulsion in der Mischzone schafft. Das ermöglicht es, die Dauer des Kontakts der Phasen miteinander zu beeinflussen, was wichtig ist für den Übergang der extrahierbaren Komponente von einer Phase zur anderen. Ausserdem entsteht die Möglichkeit, eine Mischvorrichtung ohne bewegliche Teile zu verwenden, den Zugang zu den die Emulsion bildenden Elementen zu gewährleisten und das Volumen der Absetzzone bei unveränderter Standfläche des Apparats zu erhöhen.

Die Erfindungsgemässe Ausführung und Anordnung der Mischvorrichtung ermöglicht durch Änderung des Durchgangsquerschnitts der Öffnungen in den Hohlelementen und der Anzahl der Öffnungen eine Formierung von Tropfen der dispersen Phase mit gefordertem Durchmesser und in geforderter Menge, d.h. eine Regulierung der Dispersionszusammensetzung des Phasengemisches. Die Verwendung mehrerer Hohlelemente ermöglicht eine dosierte Zuführung der dispersen Phase in einen beliebigen Teil der Mischzone, eine mehrfach wiederholte Dispergierung und Koaleszenz und einen Rückumlauf der Phasen.

Die Verbindung der Mischvorrichtung mit dem Mittel zur Zuführung der leichten Phase und/oder der schweren Phase ermöglicht eine Bildung von Tropfen der leichten oder der schweren Phase eines Gemisches der Phasen in der Mischzone, d.h. eine Bildung verschiedener Emulsionsarten.

Durch die Ausrüstung der ersten Trennwand mit einem Mittel zur Regulierung der Höhe der Schicht des Phasengemisches kann das Volumen der Emulsion geändert werden und folglich auch die Dauer des Kontakts der Phasen miteinander unabhangig vom Betrieb der Mischvorrichtung.

Die Installierung einer zweiten Transportvorrichtung in der Absetzzone beseitigt die strömungstechnische Abhängigkeit der Extraktionskammern voneinander und ermöglicht ein getrenntes Zuführen und Mischen der Phasen in der Mischzone. Das Vorhandensein einer zweiten Transportvorrichtung stabilisiert den Prozess der Regulierung der Dispersionszusammensetzung des Phasengemisches und seines Volumens sowohl in einer einzelnen Kammer, als auch im gesamten Apparat. Die Zwangszuführung der leichten und der schweren Phase aus der Absetzzone der gegebenen Extraktionskammer, bei der die Transportvorrichtungen die Phasen in die Mischzonen der benachbarten Kammern drücken, aber nicht die Phasen aus den umliegenden Kammern in die Mischzone der gegebenen Kammer ansaugen, hat eine wichtige Bedeutung besonders bei der Behandlung grosser Lösungsmengen.

Es ist zweckmässig, dass im Misch- und Absetzapparat für Flüssig-Flüssig-Extraktion jedes Hohlelement vom benachbarten Element entlang der Längsachse des Gehäuses einen bestimmten Abstand hat und in Querrichtung einen Zwischenraum mit der Seitenwand des Gehäuses bildet, wobei für zwei benachbarte Elemente die erwähnten Zwischenräume auf verschiedenen Seiten der Längsachse liegen.

Solch eine Anordnung der Hohlelemente gewährleistet ein besseres Vermischen der Phasen, eine Regulierung der Dauer des Kontakts der Phasen miteinander und einen Rückumlauf der Phasen.

Es ist erwünscht, dass im Misch- und Absetzapparat für Flüssig-Flüssig-Extraktion das Mittel zum Regulieren der Schichthöhe des Phasengemisches in der Mischzone in Form einer zweiten Trennwand ausgeführt wird, die sich über die gesamte Breite der ersten Trennwand erstreckt und in einer senkrechten Ebene bewegt werden kann.

Solch eine Ausführung des Mittels zum Regulieren der Schichthöhe des Phasengemisches ist vorteilhaft, wenn im zugeführten Phasengemisch die leichte Phase überwiegt und wenn der Rückumlauf der schweren Phase verstärkt werden soll. Das erreicht man durch Anheben der zweiten Trennwand.

3

Es ist auch möglich, dass im Misch- und Absetzapparat für Flüssig-Flüssig-Extraktion das Mittel zum Regulieren der Schichthöhe des Phasengemisches in der Mischzone in Form wenigstens eines Stutzens ausgeführt wird, der beweglich in senkrechter Ebene angebracht wird, wobei die erste Trennwand an ihrem Aussenrand herum im Gehäuse befestigt ist.

Solch eine Ausführung des Mittels zum Regulieren der Schichthöhe des Phasengemisches ist vorteilhaft, wenn im zugeführten Phasengemisch die schwere Phase überwiegt und wenn der Rückumlauf der leichten Phase verstärkt werden soll. Das erreicht man durch Herablassen der Stutzen oder durch Verwendung von Stutzen mit kleinerem lichten Querschnitt.

Kurze Beschreibung der Zeichnungen

Weitere Ziele und Vorteile der Erfindung werden aus folgendem konkretem Ausführungsbeispiel und anhand der beiliegenden Zeichnungen verständlich, und zwar zeigt:

Fig. 1 - schematisch einen erfindungsgemässen Misch- und Absetzapparat in der Draufsicht mit abgenommenem Deckel;

Fig. 2 - den Schnitt gemäss der Linie II-II nach Fig. 1;

Fig. 3 - einen teilweisen schnitt der zweiten Trennwand nach Fig. 1;

Fig. 4 - einen teilweisen Schnitt eines Hohlelements nach Fig. 1;

Fig. 5 - den Schnitt gemäss der Linie V-V nach Fig. 1;

Fig. 6 - den Schnitt gemäss der Linie VI-VI nach Fig. 1;

Fig. 7 - schematisch eine Ausführungsvariante des erfindungsgemässen Misch- und Absetzapparats in der Draufsicht mit abgenommenem Deckel;

Fig. 8 - den Schnitt gemäss der Linie VIII-VIII nach Fig. 7;

Fig. 9 - eine Ausführungsvariante des Apparats bei Verbindung der Hohlelemente mit Mitteln zum Zuführen der leichten und schweren Phase;

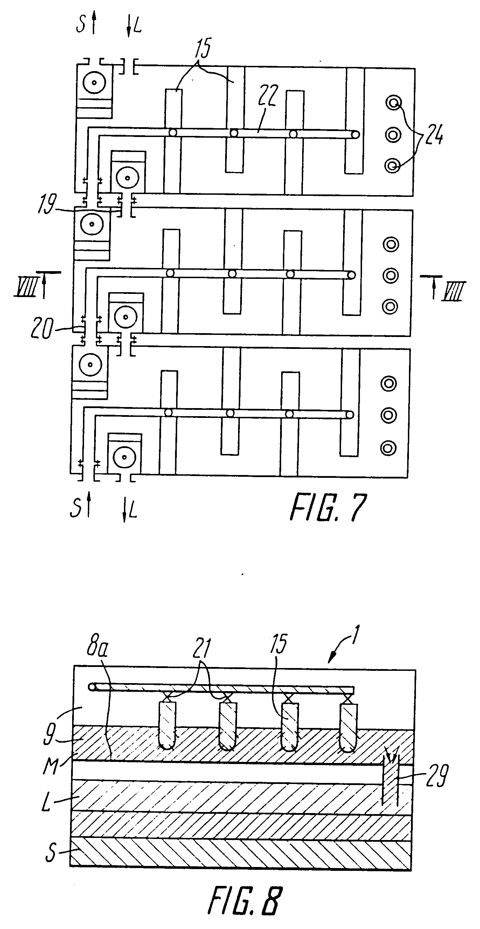

Fig. I0 - einen teilweisen Schnitt durch den Stutzen in Fig. 8.

Beste Ausführungsvariante der Erfindung

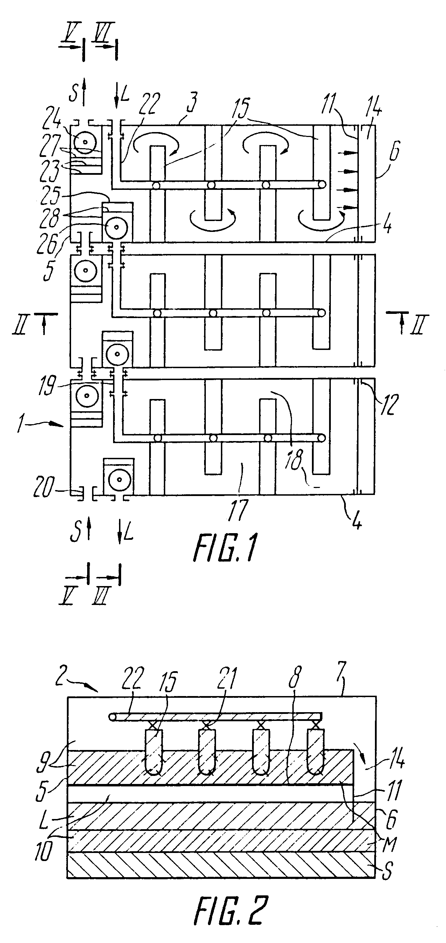

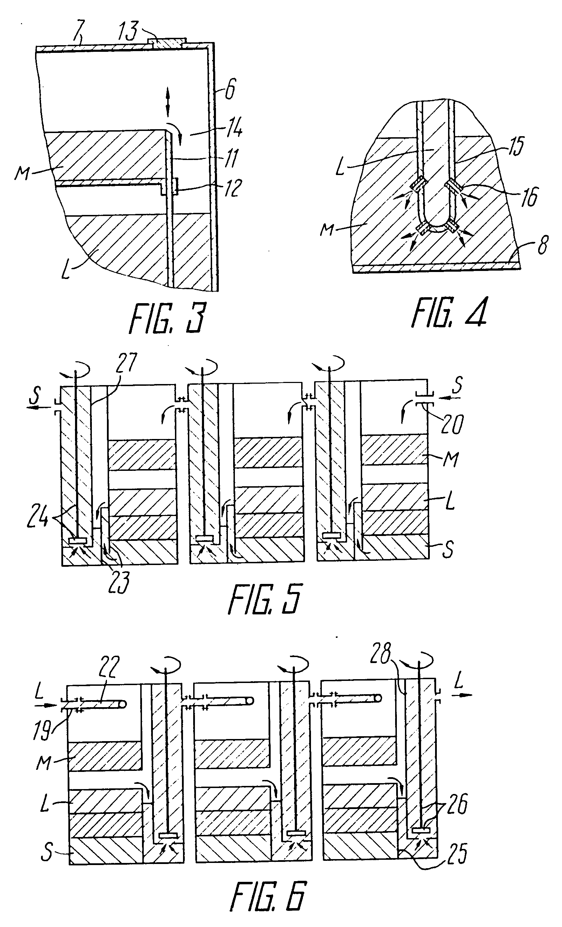

Der Misch- und Absetzapparat für die Flüssig-Flüssig-Extraktion enthält eine Reihe Extraktionskammern 1 (Fig. 1). Jede Kammer hat ein Gehäuse 2 (Fig. 2) mit Seitenwänden 3, 4 (Fig. 1), Stirnwänden 5, 6 und einem Deckel 7 (Fig. 3). Im Innern des Gehäuses 2 (Fig. 2) ist längs zu seiner Längsachse eine erste Trennwand 8 angebracht, die den Innenraum des Gehäuses 2 in eine Mischzone 9 und eine Absetzzone 10 unterteilt. über die gesamte Breite der ersten Trennwand 8 ist ein Mittel zum Regulieren der Schichthöhe des gemisches der Phasen M angebracht, das in Form einer zweiten Trennwand 11 ausgeführt ist. Diese Trennwand 11 kann sich in senkrechter Ebene an Führungsschienen 12 (Fig. 1, 3) entlang mit Hilfe einer durch eine Luke 13 im Deckel 7 des Gehäuses 2 hindurchgehenden Zugstange (nicht abgebildet) bewegen. Die zweite Trennwand 11 bildet mit der Stirnwand 6 des Gehäuses 2 einen Durchgang 14, der eine Verbindung der Mischzone 9 (Fig. 2) mit der Absetzzone 10 gewährleistet. In der Mischzone 9 befindet sich eine am Gehäuse 2 befestigte Mischvorrichtung. Sie ist in Form von Hohlelementen 15 ausgeführt, deren Wände Öffnungen 16 (Fig. 4) haben, deren Austrittsquerschnitte zur ersten Trennwand 8 hin gerichtet sind. Die Hohlelemente 15 (Fig. 1) sind senkrecht. zur Längsachse des Gehäuses 2 derart angebracht, dass jedes Hohlelement 15 vom benachbarten Hohlelement längs der Längsachse einen bestimmten Abstand hat, der einen Durchgang 17 für die Phasen bildet, und in Querrichtung einen Zwischenraum 18 mit der Seitenwand 3 bzw. 4 des Gehäuses 2 bildet. Dabei befinden sich für zwei benachbarte Elemente 15 die Zwischenräume 18 auf verschiedenen Seiten der Längsachse des Gehäuses 2. An den Seitenwänden 3, 4 sind Mittel zum Zuführen der leichten und der schweren Phase befestigt, die in Form von Stutzen 19 bzw. 20 ausgeführt sind. Die Hohlelemente 15 sind über Ventile 21 (Fig. 2) mit einer Verteilleitung 22 verbunden, die an den Stutzen 19 (Fig. 1) angeschlossen ist. Die zweite Trennwand 11 ist an der ersten Trennwand 8 an der Stelle angebracht, die in Längsrichtung am weitesten von den Stutzen 19, 20 entfernt ist.

In der Absetzzone 10 (Fig. 2) befinden sich die Schichten der Emulsion M und der leichten und der schweren Phase L und S. Hier befindet sich auch ein Mittel zum Ableiten der schweren Phase S, das einen hydraulischen Verschluss 23 (Fig. 5) und eine erste Transportvorrichtung 24 enthält, die hinter dem hydraulischen Verschluss 23 in Strömungsrichtung der schweren Phase S angeordnet ist. Die Absetzzone 10 (Fig. 2) hat auch ein Mittel zum Ableiten der leichten Phase L, das eine Überlaufvorrichtung 25 (Fig. 65) darstellt, hinter der in Strömungsrichtung der leichten Phase L eine zweite Transportvorrichtung 26 angeordnet ist. Die erste Transportvorrichtung 24 (Fig. 5) liegt im Innern einer Trennwand 27 und die zweite Transportvorrichtung 26 (Fig. 6) - im Innern einer Trennwand 28, wobei die beiden am Deckel 7 (Fig. 3) des Gehäuses 2 befestigt sind.

Der erfindungsgemässe Misch- und Absetzapparat funktioniert folgendermassen. Die leichte Phase L wird unter Druck durch den Stutzen 19 (Fig. 1), die Verteilleitung 22 und die Ventile 21 in die Hohlelemente 15 geleitet. Durch die Öffnungen 16 in den Hohlelementen 15 gelangt die leichte Phase L als Strahlen in die Mischzone 9, z.B., der mittleren Extraktionskammer 1.

Die schwere Phase S wird unter Druck durch den Stutzen 10 in die Mischzone geleitet. Sie fliesst durch den Zwischenraum 18, den Durchgang 17 zwischen den Hohlelementen 15 und teilweise auch unter den Hohlelementen hindurch und wird verwirbelt. Dabei werden in den Strom der schweren Phase die Strahlen der leichten Phase L injiziert und wird eine zusätzliche Verwirbelung des entstandenen Phasengemisches M erzeugt. Hinter dem letzten Hohlelement 15 in Strömungsrichtung des Phasengemisches M wird die Verwirbelung des Phasengemisches M abgebrochen, und das Phasengemisch läuft über die zweite Trennwand 11 in die Absetzzone 10 (Fig. 2 ). Hier fliesst der Strom in umgekehrter Richtung relativ zu seiner Strömungsrichtung in der Mischzone 9. Während der Strömüng des Stroms in der Absetzzone 10 zerlegt sich das Phasengemisch in eine reine leichte Phase L und eine reine schwere Phase S. Die reine schwere Phase S kommt durch den hydraulischen Verschluss 23 zum Eingang der ersten Transportvorrichtung 24 (Fig. 5) und gelangt weiter unter Druck in die in Strömungsrichtung der leichten Phase L vorhergehende Extraktionskammer 1. Die reine leichte Phase L fliesst über die Überlaufvorrichtung 25 zum Eingang der zweiten Transportvorrichtung 26 (Fig. 6) und weiter unter Druck in die in Strömungsrichtung der leichten Phase L nächstfolgende Extraktionskammer. Auf diese Weise bewegen sich in jeder Extraktionskammer die Phasen im Gleichstrom und im Apparat im Ganzen - im Gegenstrom.

Wenn die Höhe der Schicht des Phasengemisches M in der Mischzone 9 vergrössert oder verkleinert werden soll, wird entsprechend die Trennwand 11 gehoben bzw. herabgelassen. Die Anzahl der Hohlelemente 15 bestimmt man unter Berücksichtigung des Types des herzustellenden Phasengemisches. Wenn sich das Phasengemisch ungern abschichtet, ist eine kleinere Anzahl Hohlelemente angebracht, wenn sich das Phasengemisch aber leicht abschichtet, können mehr Hohlelemente eingesetzt werden. Da aus den Hohlelementen 15 die leichte Phase L strahlenförmig austritt, kann der Zwischenraum zwischen der Sohle der Hohlelemente 15 und der ersten Trennwand 8 minimal sein. Die Tropfen der leichten Phase L steigen dabei durch die Schicht der schweren Phase S nach oben, wodurch der Massenaustausch intensiver abläuft.

Es ist eine Ausführungsvariante des Misch- und Absetzapparats möglich, in der die Hohlelemente 15 (Fig. 7, 8) mit dem Stutzen 20 zur Zuführung der schweren Phase S verbunden sind. Diese Variante ist vorteilhaft, wenn als disperse Phase die schwere Phase auftritt.

In diesem Fall funktioniert der Apparat ähnlich wie in der oben beschriebenen Variante. Der Unterschied besteht darin, dass die leichte Phase L unter Druck durch den Stutzen 19 in die Mischzone 9 gelangt, während die schwere Phase S durch den Stutzen 20, die Verteilleitung 22 und die Ventile 21 in die Hohlelemente 15 kommt. Aus den Hohlelementen 15 wird die schwere Phase S als Strahlen in den Strom der leichten Phase L injiziert, wodurch ein Phasengemisch M entsteht. Da die schwere Phase S aus den Hohlelementen 15 ausströmt, kann der Zwischenraum zwischen der Sohle der Hohlelemente 15 und der ersten Trennwand 8 maximal sein, wobei aber die oberste Reihe der Öffnungen I6 in das Phasengemisch M eingetaucht sein muss. Solch eine Anordnung der Hohlelemente 15 ermöglicht eine Bewegung der Tropfen der schweren Phase S durch die gesamte Schicht der leichten Phase L, wodurch der Massenaustausch intensiver abläuft und eine geforderte Turbulenz des Stroms des Phasengemisches erzielt wird.

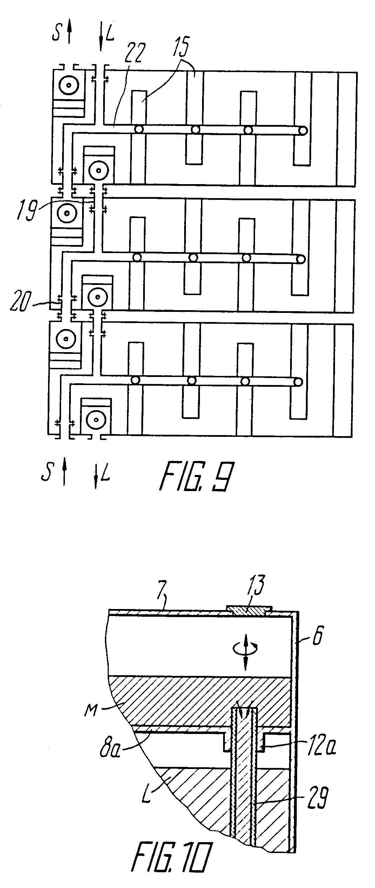

Es ist auch eine Ausführungsvariante des Apparats möglich, bei der die Hohlelemente 15 (Fig. 9) über die Verteilleitung 22 mit dem Stutzen 19 zur Zuführung der leichten Phase L und mit dem Stutzen 20 zu Zuführung der schweren Phase S verbunden sind. Solch eine Variante ist vorteilhaft, wenn ein Phasengemisch vom Typ "Fett in Wasser" verwendet wird, das sich leicht abschichtet.

Die Besonderheit der Funktion des Apparats bei dieser variante besteht darin, dass in die Hohlelemente 15 die leichte Phase L und die schwere Phase S zusammen gelangen. Die Bildung des Phasengemisches beginnt schon in der Verteilleitung 22, und das Phasengemisch M strömt aus den Hohlelementen 15 durch die Öffnungen 16. Dabei kann die Grösse des Zwischenraums zwischen der Sohle der Hohlelemente 15 und der ersten Trennwand 8 die Hälfte der Höhe der entstehenden Emulsionsschicht betragen.

Die Erfindung sieht eine Ausführungsvariante des Mittels zum Regulieren der höhe der Schicht des Phasengemisches in Form eines oder mehrerer Stutzen 29 (Fig. 8, 10) vor. Bei dieser Variante ist die erste Trennwand 8a im Gehäuse 2 an ihrem gesamten Aussenrand befestigt, und die Mischzone 9 und die Absetzzone 10 sind miteinander durch die Stutzen 29 verbunden. Die Stutzen 29 sind in der Trennwand 8a beweglich in senkrechter Ebene angebracht, wobei mit den Führungsschienen 12a eine Schraubenverbindung entsteht. Die Drehung der Stutzen 29 erfolgt durch die Luke 13 im Deckel 7 des Gehäuses 2. Den lichten Durchmesser der Stutzen 29 bestimmt man ausgehend von der Leistung des Apparats, der notwendigen Dauer des Kontakts der Phasen miteinander und den Bedingungen des Rückumlaufs der Phasen in der Mischzone.

Gewerbliche Anwendbarkeit

Am effektivsten kann die vorliegende Erfindung bei der Trennung von Seltenerdmetallen und Buntmetallen und bei der Gewinnung von Eisen(III)-chlorid aus salzsauren Ätzlösungen der Hüttenindustrie verwendet werden.

## Patentansprüche

1. Misch- und Absetzapparat für die Flüssig-Flüssig-Extraktion der eine Reihe von Extraktionskammern enthält, in dem jede Extraktionskammer (1) ein Gehäuse (2) mit einer in ihm angebrachten ersten Trennwand (8) hat, die den Innenraum des Gehäuses (2) in eine Mischzone (9), in der sich eine am Gehäuse (2) befestigte Mischvorrichtung und Mittel für die Zuführung der leichten bzw. schweren Phase L, S befinden, und eine mit der Mischzone (9) verbundene Absetzzone (10) unterteilt, in der ein am Gehäuse (2) befestigtes Mittel zur Ableitung der leichten Phase L, das eine Überlaufvorrichtung (25) darstellt, und ein Mittel zur Ableitung der schweren Phase S, das einen hydraulischen Verschluss (23) und eine mit ihm verbundene erste Transportvorrichtung (24) darstellt, untergebracht sind, **dadurch gekennzeichnet**, dass die erste Trennwand (8) längs der Längsachse des Gehäuses (2) über der Überlaufvorrichtung (25) angebracht ist, die Mischvorrichtung in Form wenigstens eines Hohlelements (15) ausgeführt ist, dessen Wände Öffnungen (16) haben, deren Austrittsquerschnitte zur ersten Trennwand (8) hin gerichtet sind, und das vorrangig senkrecht zur Längsachse des Gehäuses (2) aufgestellt und mit einem Mittel zur Zuführung wenigstens einer der Phasen verbunden ist, die erste Trennwand (8) ein Mittel zur Regulierung der Höhe der Schicht des Phasengemisches M in der Mischzone (9) hat, das an dieser Trennwand an der Stelle befestigt ist, die in Längsrichtung am weitesten vom Mittel zur Zuführung der Phasen L, S entfernt ist, und in der Absetzzone (10) eine zweite Transportvorrichtung (26) vorgesehen ist, die am Gehäuse (2) hinter der Überlaufvorrichtung (25) in Strömungsrichtung der leichten Phase L befestigt ist.

2. Misch- und Absetzapparat für die Flüssig-Flüssig-Extraktion nach Anspruch 1, **dadurch gekennzeichnet**, dass jedes Hohlelement (15) vom benachbarten Element entlang der Längsachse des Gehäuses (2) einen bestimmten Abstand hat und in Querrichtung einen Zwischenraum (18) mit der Seitenwand (3) des Gehäuses (2) bildet, wobei für zwei benachbarte Elemente die erwähnten Zwischenräume auf verschiedenen Seiten der Längsachse liegen.

3. Misch- und Absetzapparat für die Flüssig-Flüssig-Extraktion nach Ansprüchen 1 und 2, **dadurch gekennzeichnet**, dass das Mittel zum Regulieren der Schichthöhe des Phasengemisches M in der Mischzone (9) in Form einer zweiten Trennwand (11) ausgeführt ist, die sich über die gesamte Breite der ersten Trennwand (8) erstreckt und in einer senkrechten Ebene bewegt werden kann.

4. Misch- und Absetzapparat für die Flüssig-Flüssig-Extraktion nach Ansprüchen 1 und 2, **dadurch gekennzeichnet**, dass das Mittel zum Regulieren der Schichthöhe des Phasengemisches M in der Mischzone (9) im Form wenigstens eines Stutzens (29) ausgeführt ist, der beweglich in senkrechter Ebene angebracht ist, wobei die erste Trennwand (8) an ihrem Aussenrand herum im Gehäuse (2) befestigt ist.

## Claims

1. Mixer-settler for liquid-liquid extraction, containing a row of extraction chambers, in which each extraction chamber (1) has a casing (2) accommodating a first partition (8) arranged therein, which divides the interior of the casing (2) into a mixing zone (9) having arranged therein mixing means attached to the casing (2) and means for feeding the light or heavy phase L, S respectively, and into a settling zone (10) which communicates with the mixing zone (9) and in which a means attached to the casing (2) for discharging the light phase L, which represents an overflow device (25), and a means for discharging the heavy phase S, which represents a hydraulic seal (23) and a first transport means (24) communicating therewith, are accommodated, **characterised in that** the first partition (8) is disposed along the longitudinal axis of the casing (2) above the overflow device (25), the mixing means is designed in the form of at least one hollow element (15) whose walls have holes (16) having outlet cross-sections pointing to the first partition (8) and which is mounted substantially perpendicular to the longitudinal axis of the casing (2) and is connected to a means for feeding at least one of the phases, the first partition (8) has a means which is to control the level of the layer of the phase mixture M in the mixing zone (9) and is fixed to this partition at the point which is furthest away in the longitudinal direction from the means for feeding the phases L, S, and, in the settling zone (10), a second transport means (26) is provided which is fixed to the casing (2) downstream of the overflow device (25) in the direction of flow of the light phase L.

2. Mixer-settler for liquid-liquid extraction according to Claim 1, **characterised in that** each hollow element (15) is spaced from the adjacent element along the longitudinal axis of the casing (2) by a defined distance and, in the transverse direction, forms an interspace (18) with the side wall (3) of the casing (2), the said interspaces for two adjacent elements being located on different sides of the longitudinal axis.

3. Mixer-settler for liquid-liquid extraction according to Claims 1 and 2, **characterised in that** the means for controlling the level of the layer of the phase mixture M in the mixing zone (9) is designed in the form of a second partition (11) which extends over the entire width of the first partition (8) and can be moved in a vertical plane.

4. Mixer-settler for liquid-liquid extraction according to Claims 1 and 2, **characterised in that** the means for controlling the level of the layer of the phase mixture M in the mixing zone (9) is designed in the form of at least one branch (29) which is fitted movably in a vertical plane, the first partition (8) being fixed by its perimeter in the casing (2).

**Revendications**

1. Mélangeur-décanteur pour l'extraction liquide-liquide, qui comprend une série de chambres d'extraction, dans lequel chaque chambre d'extraction (1) comporte un corps (2), où est logée une première cloison (8) qui partage la cavité intérieure du corps (2) en une zone (9) de mélange dans laquelle sont disposés, et fixés sur ledit corps (2), un dispositif de mélange et un moyen pour l'amenée d'une phase légère et d'une phase lourde S, respectivement, et une zone (10) de décantation liée à la zone (9) de mélange, dans laquelle sont disposés un moyen d'amenée de la phase légère L, fixé sur le corps (2) et constitué par un dispositif de transvasement (25) et un dispositif d'évacuation de la phase lourde S comprenant une fermeture hydraulique (23) et un premier dispositif de transport (24) qui lui est relié, **caractérisé en ce que** la première cloison (8) est disposée suivant l'axe longitudinal du corps (2) au-dessus du dispositif de transvasement (25), que le dispositif de mélange est constitué au moins par un élément creux (15) dans les parois duquel sont pratiqués des trous (16), dont les sections de sortie sont orientées vers la première cloison (8), monté, de préférence en dépassant, perpendiculairement à l'axe longitudinal du corps (2) et lié au moyen d'amenée au moins d'une des phases, que la première cloison (8) est munie d'un moyen assurant le réglage de la hauteur de la couche de mélange des phases M dans la zone (9) de mélange, monté sur ladite cloison à l'endroit éloigné à la distance maximale dans le sens longitudinal du moyen d'amenée des phases L, S et en ce qu'un deuxième dispositif de transport (26) est prévu dans la zone de décantation (10), qui est fixé sur le corps (2) et se trouve en aval du dispositif de transvasement (25) suivant le déplacement de la phase légère L.

2. Mélangeur-décanteur pour l'extraction liquide-liquide selon la revendication 1, **caractérisé en ce que** chaque élément creux (15) est éloigné de l'élément voisin suivant l'axe longitudinal du corps (2), d'une certaine distance et formé, dans le sens transversal, un espacement (18) avec la paroi latérale (3) du corps (2), et les espacements susmentionnés pour deux éléments voisins se trouvent de différents côtés de l'axe longitudinal.

3. Mélangeur-décanteur pour l'extraction liquide-liquide selon les revendications 1 et 2, **caractérisé en ce que** le moyen de réglage de la hauteur de la couche de mélange des phases M dans la zone de mélange (9) est constitué par une seconde cloison (11) montée suivant toute la largeur de la première cloison (8) avec possibilité de se déplacer dans un plan vertical.

4. Mélangeur-décanteur pour l'extraction liquide-liquide selon les revendications 1 et 2, **caractérisé en ce que** le moyen de réglage de la hauteur de la couche de mélange des phases M dans la zone (9) de mélange est constitué au moins par une tubulure (29) montée de façon qu'elle puisse se déplacer dans le plan vertical, la première cloison (8) étant fixée dans le corps (2) suivant son périmètre.

FIG.1

FIG.2

FIG. 3

FIG. 4

FIG. 5

FIG. 6

EP 0 355 159 B1

FIG. 7

FIG. 8

10

FIG. 9

FIG. 10